(19) 

**Europäisches Patentamt**
**European Patent Office**
**Office européen des brevets**

(11) **EP 4 340 062 B1**

(12) **EUROPEAN PATENT SPECIFICATION**

(45) Date of publication and mention
of the grant of the patent:
**18.02.2026 Bulletin 2026/08**

(21) Application number: **22899088.3**

(22) Date of filing: **25.11.2022**

(51) International Patent Classification (IPC):
$H01M\ 4/36^{(2006.01)}$    $H01M\ 4/48^{(2010.01)}$
$H01M\ 4/62^{(2006.01)}$    $C01B\ 33/113^{(2006.01)}$
$H01M\ 10/052^{(2010.01)}$    $H01M\ 4/02^{(2006.01)}$
$H01M\ 4/131^{(2010.01)}$    $H01M\ 4/136^{(2010.01)}$
$H01M\ 4/485^{(2010.01)}$    $H01M\ 4/58^{(2010.01)}$
$H01M\ 10/0525^{(2010.01)}$

(52) Cooperative Patent Classification (CPC):
**C01B 33/113; H01M 4/131; H01M 4/136;**
**H01M 4/366; H01M 4/485; H01M 4/5825;**
**H01M 4/625; H01M 10/0525;** H01M 2004/021;
Y02E 60/10

(86) International application number:
**PCT/KR2022/018850**

(87) International publication number:
**WO 2023/096406 (01.06.2023 Gazette 2023/22)**

(54) **ANODE ACTIVE MATERIAL, ANODE COMPRISING SAME, SECONDARY BATTERY COMPRISING SAME, AND METHOD FOR MANUFACTURING ANODE ACTIVE MATERIAL**

ANODENAKTIVMATERIAL, ANODE DAMIT, SEKUNDÄRBATTERIE DAMIT UND VERFAHREN ZUR HERSTELLUNG EINES ANODENAKTIVMATERIALS

MATÉRIAU ACTIF D'ANODE, ANODE LE COMPRENANT, BATTERIE SECONDAIRE LE COMPRENANT, ET PROCÉDÉ DE FABRICATION DE MATÉRIAU ACTIF D'ANODE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.11.2021 KR 20210165299**

(43) Date of publication of application:
**20.03.2024 Bulletin 2024/12**

(73) Proprietor: **LG Energy Solution, Ltd.**
**Seoul 07335 (KR)**

(72) Inventors:
• **OH, Ilgeun**
  **Daejeon 34122 (KR)**
• **CHOI, Junghyun**
  **Daejeon 34122 (KR)**
• **SHIN, Sun Young**
  **Daejeon 34122 (KR)**

• **PARK, Semi**
  **Daejeon 34122 (KR)**
• **LEE, Yong Ju**
  **Daejeon 34122 (KR)**
• **PARK, Heeyeon**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
CN-A- 112 820 863    JP-A- 2017 188 344
JP-A- 2018 014 188    KR-A- 20150 040 105
KR-A- 20180 114 061    KR-A- 20210 061 009
US-A1- 2019 214 637    US-A1- 2020 235 383
US-A1- 2020 350 563

EP 4 340 062 B1

**Description**

The present invention relates to a negative electrode active material, a negative electrode including the same, a secondary battery including the same, and a method for preparing the negative electrode active material.

[Background Art]

Recently, with the rapid spread of electronic devices using batteries such as mobile phones, notebook-sized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted.

In general, a lithium secondary battery includes a positive electrode, a negative electrode, a separator interposed between the positive electrode and the negative electrode, an electrolyte, an organic solvent and the like. Further, for the positive electrode and the negative electrode, an active material layer including each of a positive electrode active material and a negative electrode active material may be formed on a current collector. In general, lithium-containing metal oxides such as $LiCoO_2$ and $LiMn_2O_4$ have been used as the positive electrode active material for the positive electrode, and lithium-free carbon-based active materials and silicon-based active materials have been used as the negative electrode active material for the negative electrode.

Among the negative electrode active materials, the silicon-based active material is attracting attention because the silicon-based active material has a high capacity and excellent high-speed charging characteristics compared to the carbon-based active material. However, the silicon-based active material has a disadvantage in that the initial efficiency is low because the degree of volume expansion/contraction due to charging/discharging is large and the irreversible capacity is large.

Meanwhile, among the silicon-based active materials, a silicon-based oxide, specifically, a silicon-based oxide represented by $SiO_x$ ($0<x<2$) has an advantage in that the degree of volume expansion/contraction due to charging/-discharging is low compared to other silicon-based active materials such as silicon (Si). However, the silicon-based oxide still has a disadvantage in that the initial efficiency is lowered depending on the presence of the irreversible capacity.

In this regard, studies have been continuously conducted to reduce irreversible capacity and improve initial efficiency by doping or intercalating a metal such as Li, Al, and Mg into silicon-based oxides. However, in the case of a negative electrode slurry including a metal-doped silicon-based oxide as a negative electrode active material, there is a problem in that the metal oxide formed by doping the metal reacts with moisture to increase the pH of the negative electrode slurry and change the viscosity thereof, and accordingly, there is a problem in that the state of the prepared negative electrode becomes poor and the charge/discharge efficiency of the negative electrode is reduced.

Accordingly, there is a need for the development of a negative electrode active material capable of improving the phase stability of a negative electrode slurry including a silicon-based oxide and improving the charge/discharge efficiency of a negative electrode prepared therefrom.

Korean Patent No. 10-0794192 relates to a method for preparing a carbon-coated silicon-graphite composite negative electrode material for a lithium secondary battery and a method for preparing a secondary battery including the same, but has a limitation in solving the above-described problems.

US 2019/0214637 A1 relates to a negative electrode active material for a non-aqueous electrolyte secondary battery, wherein the negative electrode active material includes negative electrode active material particles, the negative electrode active material particles include a silicon compound particle which includes a silicon compound including oxygen, the silicon compound particle includes a Li compound, and the silicon compound particle is adhered with a phosphate salt in an outermost surface layer thereof.

[Related Art Document]

    (Patent Document 1) Korean Patent No. 10-0794192
    (Patent Document 2) US 2019/0214637 A1

[Detailed Description of the Invention]

[Technical Problem]

The present invention relates to a negative electrode active material, a negative electrode including the same, a secondary battery including the same and a method for preparing the negative electrode active material.

[Technical Solution]

An exemplary embodiment of the present invention provides a negative electrode active material including: silicon-based particles including $SiO_x$ (0<x<2) and Li and having a first carbon layer provided on at least a portion of the surface thereof; a composite layer provided on at least a portion of the silicon-based particle; and a second carbon layer provided on at least a portion of the composite layer, in which the composite layer includes Li, M, P and O elements, the M is Al, B or Zn, and a ratio of D band peak intensity to G band peak intensity (D/G band ratio) is 1.0 or more upon analysis of the negative electrode active material by Raman spectroscopy, wherein a molar ratio of the M element and the P element is 1:0.5 to 1:3.

An exemplary embodiment of the present invention provides a method for preparing a negative electrode active material, the method including: forming silicon-based particles including $SiO_x$ (0<x<2) and Li and having a first carbon layer provided on at least a portion of the surface thereof; forming a composite layer on at least a portion of the silicon-based particle by reacting the silicon-based particles with a phosphate solution; and forming a second carbon layer on at least a portion of the composite layer.

An exemplary embodiment of the present invention provides a negative electrode including the negative electrode active material.

An exemplary embodiment of the present invention provides a secondary battery including the negative electrode.

[Advantageous Effects]

A negative electrode including the negative electrode active material according to an exemplary embodiment of the present invention and a secondary battery including the negative electrode have an effect of improving the discharge capacity, initial efficiency, resistance performance and/or service life characteristics of the battery.

[Best Mode]

Hereinafter, the present specification will be described in more detail.

When one part "includes" one constituent element in the present specification, unless otherwise specifically described, this does not mean that another constituent element is excluded, but means that another constituent element may be further included.

When one member is disposed "on" another member in the present specification, this includes not only a case where the one member is brought into contact with another member, but also a case where still another member is present between the two members.

Terms or words used in the specification should not be interpreted as being limited to typical or dictionary meaning and should be interpreted with a meaning and a concept which conform to the technical spirit of the present invention based on the principle that an inventor can appropriately define a concept of a term in order to describe his/her own invention in the best way.

Singular expressions of the terms used in the present specification include plural expressions unless they have definitely opposite meanings in the context.

In the present specification, the crystallinity of a structure included in a negative electrode active material can be confirmed by TEM or X-ray diffraction analysis, the X-ray diffraction analysis may be performed using an X-ray diffraction (XRD) analyzer (trade name: D4-endavor, manufacturer: Bruker), and in addition to the analyzer, an apparatus used in the art may be appropriately employed.

In the present specification, the presence or absence of an element and the content of the element in a negative electrode active material can be confirmed by ICP analysis, and the ICP analysis may be performed using an inductively coupled plasma atomic emission spectrometer (ICPAES, Perkin Elmer 7300).

In the present specification, an average particle diameter ($D_{50}$) may be defined as a particle diameter corresponding to 50% of a cumulative volume in a particle size distribution curve (graph curve of the particle size distribution map) of the particles. The average particle diameter ($D_{50}$) may be measured using, for example, a laser diffraction method. The laser diffraction method can generally measure a particle diameter of a region of from about submicron to about several mm, and results with high reproducibility and high resolution may be obtained.

**<Negative electrode active material>**

An exemplary embodiment of the present invention provides a negative electrode active material including:

silicon-based particles including $SiO_x$ (0<x<2) and Li and having a first carbon layer provided on at least a portion of the surface thereof; a composite layer provided on at least a portion of the silicon-based particle; and a second carbon layer provided on at least a portion of the composite layer, in which the composite layer includes Li, M, P and O elements, the M is Al, B or Zn, and a ratio of D band peak intensity to G band peak intensity (D/G band ratio) is 1.0 or more upon analysis of the negative electrode active material by Raman spectroscopy, wherein a molar ratio of the M element and the P element is 1:0.5 to 1:3.

The negative electrode active material according to an exemplary embodiment of the present invention includes silicon-based particles. The silicon-based particles include $SiO_x$ (0<x<2) and Li, and may have a first carbon layer provided on at least a portion of the surface thereof.

The $SiO_x$ (0<x<2) corresponds to a matrix in the silicon-based particle. The $SiO_x$ (0<x<2) may be in a form including Si and $SiO_2$, and the Si may also form a phase. That is, the x corresponds to the number ratio of O for Si included in the $SiO_x$ (0<x<2). When the silicon-based particles include the $SiO_x$ (0<x<2), the discharge capacity of a secondary battery may be improved.

In an exemplary embodiment of the present invention, the silicon-based particles may include Li. The Li may be present in the form of at least one of a lithium atom, a lithium silicate, a lithium silicide, and a lithium oxide in the silicon-based particle, and may be present preferably in the form of a lithium silicate. When the Li is present in the form of a Li compound, the Li compound may correspond to a matrix in the silicon-based particle. When the silicon-based particles include Li, there is an effect that the initial efficiency is improved.

The Li may also be in a form in which the silicon-based particles are doped with Li, and may be distributed on the surface and/or inside of the silicon-based particle. The Li is distributed on the surface and/or inside of the silicon-based particle, and thus may control the volume expansion/contraction of the silicon-based particles to an appropriate level, and may serve to prevent damage to the active material. Further, the Li may be contained in terms of reducing the ratio of the irreversible phase (for example, $SiO_2$) of the silicon-based oxide particles to increase the efficiency of the active material.

In an exemplary embodiment of the present invention, Li may be present in the form of a lithium silicate. The lithium silicate is represented by $Li_aSi_bO_c$ ($2 \leq a \leq 4$, $0 < b \leq 2$, $2 \leq c \leq 5$) and may be classified into crystalline lithium silicate and amorphous lithium silicate. The crystalline lithium silicate may be present in the form of at least one lithium silicate selected from the group consisting of $Li_2SiO_3$, $Li_4SiO_4$ and $Li_2Si_2O_5$ in the silicon-based particles, and the amorphous lithium silicate may consist of a complex structure in the form of $Li_aSi_bO_c$ ($2 \leq a \leq 4$, $0 < b \leq 2$, $2 \leq c \leq 5$), and are not limited to the forms.

In an exemplary embodiment of the present invention, the Li included in the silicon-based particles may be included in an amount of 0.01 parts by weight to 10 parts by weight, 0.01 parts by weight to 5 parts by weight or 0.01 parts by weight to 1 part or 0.02 parts by weight to 0.8 parts by weight, based on total 100 parts by weight of the negative electrode active material. Specifically, the Li may be included in an amount of 0.05 part by weight to 0.8 parts by weight, more specifically 0.1 parts by weight to 0.5 parts by weight. There is a problem in that as the content of Li is increased, the initial efficiency is increased, but the discharge capacity is decreased, so that when the content satisfies the above range, appropriate discharge capacity and initial efficiency may be implemented.

In an exemplary embodiment of the present invention, the Li may be included in an amount of 0.1 parts by weight to 40 parts by weight or 0.1 parts by weight to 25 parts by weight based on total 100 parts by weight of the negative electrode active material. Specifically, the Li may be included in an amount of 1 part by weight to 25 parts by weight, more specifically 2 parts by weight to 20 parts by weight. There is a problem in that as the content of Li is increased, the initial efficiency is increased, but the discharge capacity is decreased, so that when the content satisfies the above range, appropriate discharge capacity and initial efficiency may be implemented.

The content of the Li element can be confirmed by ICP analysis. Specifically, after a predetermined amount (about 0.01 g) of a sample is aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of an element to be analyzed using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the contents of the elements of the sample may be analyzed by converting the total sum so as to be the theoretical value.

The silicon-based particles according to an exemplary embodiment of the present invention have a first carbon layer provided on at least a portion of the surface thereof. In this case, the first carbon layer may be in the form of covering at least a portion of the surface, that is, partially covering the surface of the particle, or covering the entire surface of the particle. By the carbon layer, conductivity is imparted to the negative electrode active material, and the initial efficiency, service life characteristics, and battery capacity characteristics of the secondary battery may be improved.

Specifically, the first carbon layer may include crystalline carbon or amorphous carbon.

The crystalline carbon may further improve the conductivity of the negative electrode active material.

The crystalline carbon may include at least one selected in the group consisting of fullerene, carbon nanotubes and graphene.

The amorphous carbon may suppress the expansion of the silicon-based particles by appropriately maintaining the strength of the first carbon layer. The amorphous carbon may be a carbide of at least one substance selected from the group consisting of tar, pitch and other organic materials, or may be a carbon-based material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the first carbon layer may be included in an amount of 1 part by weight to 5 parts by weight, 2 parts by weight to 4 parts by weight or 2 parts by weight to 3.5 parts by weight, based on total 100 parts by weight of the negative electrode active material. More specifically, the first carbon layer may be included in an amount of 2.5 part by weight to 3 parts by weight. When the above range is satisfied, it is possible to prevent a decrease in the capacity and efficiency of the negative electrode active material.

In an exemplary embodiment of the present invention, the first carbon layer may have a thickness of 1 nm to 500 nm, specifically 5 nm to 300 nm. When the above range is satisfied, the conductivity of the negative electrode active material is improved, the volume change of the negative electrode active material is readily suppressed, and side reactions between an electrolyte solution and the negative electrode active material are suppressed, so that there is an effect that the initial efficiency and/or service life of a battery is/are improved.

Specifically, the first carbon layer may be formed by a chemical vapor deposition (CVD) method using at least one hydrocarbon gas selected from the group consisting of methane, ethane and acetylene.

The negative electrode active material according to an exemplary embodiment of the present invention includes a composite layer provided on at least a portion of the silicon-based particle.

The composite layer may be in the form of covering at least a portion of the surface of the silicon-based particle, that is, partially covering the surface of the particle, or entirely covering the surface of the particle. Examples of a shape of the composite layer include an island type, a thin film type, or the like, but the shape of the composite layer is not limited thereto.

The composite layer may be provided on at least a portion of the first carbon layer. That is, the composite layer may be in the form of covering at least a portion of the first carbon layer, that is, partially covering the surface of the first carbon layer, or entirely covering the surface of the first carbon layer.

the negative electrode active material includes Li, M, P and O elements. Specifically, the composite layer includes Li, M, P and O elements. The M may be Al, B or Zn.

The Li element and the M element can be confirmed by an ICP-OES analysis using an inductively coupled plasma atomic emission spectrometer (ICP-OES, AVIO 500 from Perkin-Elmer 7300).

The P element and the O element may be detected through analysis by X-ray photoelectron spectroscopy (XPS). Further, the M element may be additionally detected. Specifically, the additional detection of the M element can be confirmed through XPS (Nexsa ESCA System, Thermo Fisher Scientific (NEXSA 1)).

In general, a lithium by-product formed by unreacted lithium in the process of doping silicon-based particles with Li is present on the surface of the silicon-based particles, so that there is a problem in that when the slurry is formed, the rheological properties of the slurry are changed because the slurry becomes basic and lithium compounds react with moisture to generate gas.

In the present invention, by reacting the lithium by-product with a phosphate solution to form an inorganic material composite layer including Li, M, P and O, unreacted lithium by-products included in the silicon-based particles are effectively removed, so that it is possible to prevent a phenomenon in which lithium by-products react with the moisture of the slurry to lower the viscosity of the slurry. Further, the formed composite layer effectively passivates the silicon-based particles from moisture, so that there is an effect of improving the stability of the electrode state and/or the charge/-discharge capacity from the effective passivation.

In addition, when the composite layer further includes Li, there is an effect that the discharging rate-limiting characteristics (rate capability) become excellent because the Li diffusion resistance of the negative electrode active material surface is reduced.

In the present invention, the molar ratio of the M element and the P element is 1:0.5 to 1:3, 1:0.8 to 1:3 or 1:1 to 1:3, specifically 1:1 to 1:2, and more specifically 1:1. When the molar ratio of the M element and the P element does not satisfy the above range, the formed composite layer aggregates outside the surface of the active material, making it difficult to uniformly apply the surface of the composite layer, but when the molar ratio of the M element and the P element satisfies the above range, the composite layer produced by reacting with Li has an effect of more uniformly applying the surface of the active material.

In the present invention, the composite layer includes Li, M, P and O elements.

In an exemplary embodiment of the present invention, the composite layer may be present in the form of including lithium oxides, M-containing oxides and phosphorus oxides. In an example, the composite layer may include M-containing oxides, phosphorous oxides, lithium oxides, M-containing phosphates, lithium salts, lithium phosphates, lithium metal (M) salts, and the like, and y, z, w and v mean the number ratio of each atom. In an example, when the M is Al, the composite layer may include a mixture or compound formed from $Li_3PO_4$, $AlPO_4$, $Al(PO_3)_3$, $LiAlO_2$, or the like, but is not limited thereto.

The contents of the Li element and the M element can be confirmed by an ICP-OES analysis using an inductively coupled plasma atomic emission spectrometer (ICP-OES, AVIO 500 from Perkin-Elmer 7300).

The contents of the M, P and O elements can be confirmed through XPS (Nexsa ESCA System, Thermo Fisher Scientific (NEXSA 1)).

The elements included in the composite layer may have a molar ratio of $Li_yM_zP_wO_v$ ($0<y\leq3$, $0<z\leq1$, $0.5\leq w\leq3$, and $4<v\leq12$). Alternatively, the elements included in the composite layer may have a molar ratio of $Li_yM_zP_wO_v$ ($0<y\leq3$, $0<z\leq1$, $1\leq w\leq3$, and $4<v\leq12$). The composite layer includes the elements at the above molar ratio, so that there is an effect that the surface of the active material is more uniformly applied.

In an exemplary embodiment of the present invention, the composite layer may be formed by the reaction of a lithium by-product and a phosphate solution located on the silicon-based particles. Specifically, the composite layer may be formed by preparing silicon-based particles including Li, and then reacting the lithium by-product remaining near the surface of the silicon-based particles due to unreacted lithium with a metal phosphate solution.

The phosphate solution may include Al, B or Zn. Specifically, the phosphate solution may be a mixed solution of a salt containing Al, B or Zn and a phosphoric acid solution. Specifically, the phosphate solution may be a mixed solution of an $Al_2(SO_4)_3$ solution and a $H_3PO_4$ solution, or a mixed solution of a $B(OH)_3$ solution and a $H_3PO_4$ solution.

In an exemplary embodiment of the present invention, the lithium by-product may be one or more selected from the group consisting of $Li_2O$, $LiOH$ and $Li_2CO_3$. That is, the composite layer may be formed by reacting one or more selected from the group consisting of $Li_2O$, $LiOH$ and $Li_2CO_3$ with a phosphate solution.

Since the composite layer produced as described above is hardly soluble in water and can efficiently passivate the silicon-based particles in a water-based slurry, there is an effect of improving the water-based processability by preventing the Li compound, and the like included in the silicon-based particles from being eluted.

In an exemplary embodiment of the present invention, the composite layer may be included in an amount of 0.5 parts by weight to 3 parts by weight based on total 100 parts by weight of the negative electrode active material. Specifically, the composite layer may be included in an amount of 0.7 parts by weight to 2.9 parts by weight or 0.8 parts by weight to 2.8 parts by weight. When the above range is satisfied, there is an effect that the silicon-based particles can be effectively passivated by sufficiently reacting with the lithium by-product. Conversely, when the content is less than the above range, the coverage of the composite layer may be low, and when the content is more than 3 parts by weight, the resistance may be too high when a battery is manufactured.

In an exemplary embodiment of the present invention, a lithium by-product may additionally be present between the silicon-based particles and the composite layer. Alternatively, a lithium by-product may be additionally present between the first carbon layer and the composite layer.

The lithium by-product may include one or more selected from the group consisting of $Li_2O$, $LiOH$ and $Li_2CO_3$. As described above, the lithium compound and the phosphate react to form a composite layer, and when the composite layer is formed, lithium by-products that are not completely removed may be present between the silicon-based particles and the composite layer or on the surface of the composite layer.

The negative electrode active material according to an exemplary embodiment of the present invention includes a composite layer provided on at least a portion of the silicon-based particle, and includes a second carbon layer provided on at least a portion of the composite layer.

Even when the composite layer is formed on the silicon-based particles as described above, the lithium by-products may not be completely removed. Therefore, by providing the second carbon layer on the composite layer as described above, it is possible to prevent the slurry from becoming basic during slurry formation by effectively covering the remaining lithium by-products. In addition, since the second carbon layer has hydrophobicity, it is possible to minimize the reaction between the negative electrode active material and water in the water-based slurry.

Therefore, a lithium compound may be present between the composite layer and the second carbon layer. The lithium compound may be the above-described remaining lithium by-product.

Whether the lithium compound is present between the composite layer and the second carbon layer can be confirmed through X-ray diffraction analysis (XRD) or X-ray photoelectron spectroscopy (XPS).

The second carbon layer may be provided on at least a portion of the surface of the silicon-based particles provided with the composite layer. That is, the second carbon layer may be present on at least a portion of the composite layer, or may also be present on a part of the surface of the silicon-based particles where the composite layer is not provided.

The second carbon layer may be provided on at least a portion of the composite layer. That is, the second carbon layer may be in the form of covering at least a portion of the composite layer, that is, partially covering the surface of the composite layer, or entirely covering the surface of the composite layer.

In an exemplary embodiment of the present invention, the second carbon layer includes amorphous carbon. The second carbon layer may further include crystalline carbon.

The crystalline carbon may further improve the conductivity of the negative electrode active material. The crystalline carbon may include at least one selected from the group consisting of fullerene, carbon nanotubes and graphene.

The amorphous carbon may suppress the expansion of the silicon-based particles by appropriately maintaining the strength of the second carbon layer. The amorphous carbon may be a carbide of at least one substance selected from the group consisting of tar, pitch and other organic materials, or may be a carbon-based material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the second carbon layer may be included in an amount of 0.5 parts by weight to 5 parts by weight, specifically 0.5 parts by weight to 4 parts by weight, and more specifically 0.7 parts by weight to 4 parts by weight based on total 100 parts by weight of the negative electrode active material. When the above range is satisfied, it is possible to prevent a decrease in the capacity and efficiency of the negative electrode active material.

In an exemplary embodiment of the present invention, the second carbon layer may have a thickness of 1 nm to 500 nm, specifically 5 nm to 300 nm. When the above range is satisfied, the conductivity of the negative electrode active material is improved, the volume change of the negative electrode active material is readily suppressed, and side reactions between an electrolyte solution and the negative electrode active material are suppressed, so that there is an effect that the initial efficiency and/or service life of a battery is/are improved.

The second carbon layer may be formed under a temperature condition of less than 800°C by a chemical vapor deposition (CVD) method using at least one hydrocarbon gas selected from the group consisting of methane, ethane and acetylene.

In the present invention, the Raman spectroscopy is a method of analyzing the structure of the carbon layer, and in the Raman spectrum of the carbon layer, a peak present in the region near the wave number of 1,580 cm$^{-1}$ is called the G band, and is a peak indicating sp2 bonding of the carbon layer, indicating carbon crystals having no structural defects. Meanwhile, in the Raman spectrum, a peak present in the region near the wave number of 1,360 cm$^{-1}$ is called the D band, and is a peak indicating the sp3 bonding of the carbon layer, and when the atomic bond consisting of sp2 bonds breaks and becomes sp3 bond, the D band increases. Such a D-band increases when a disorder or defect present in the carbon layer is produced. The G band of the Raman spectrum for the carbon layer may be a peak present in the region of the wave number of 1,550 cm$^{-1}$ to 1,620 cm$^{-1}$, and the D band may be a peak present in the region of the wave number of 1,330 cm$^{-1}$ to 1,370 cm$^{-1}$. The wave number range for the G band and D band corresponds to a range that may be shifted by the laser light source used for Raman spectroscopy.

In the present invention, the crystallinity of the carbon layer can be confirmed by calculating the D/G band ratio by Raman spectroscopy. Specifically, the D/G band ratio may be measured using Renishaw 2000 Raman microscope system and 532 nm laser excitation and using a 100x optical lens under conditions of a low laser power density and an exposure time of 30 seconds to avoid laser thermal effects. After a total of 25 points in a 5 μm x 5 μm region are measured and fitting is performed using the Lorentzian function to reduce positional deviation, the D/G band ratio may be calculated by calculating the average value of the D band and the G band.

In an exemplary embodiment of the present invention, when the negative electrode active material is analyzed by Raman spectroscopy, the ratio of D band peak intensity to G band peak intensity (D/G band ratio) may be 1.0 or more. Specifically, the D/G band ratio may be 1.01 or more, 1.02 or more, 1.03 or more, 1.04 or more or 1.05 or more. The upper limit of the D/G band ratio may be 3 or less, 2.5 or less, 2 or less or 1.5 or less.

When the D/G band ratio satisfies 1.0 or more, the degree of amorphization of the entire carbon included in the first carbon layer and the second carbon layer included in the negative electrode active material is enhanced.

That is, since the carbon layer included in the negative electrode active material may effectively cover the remaining lithium by-product by including a large amount of amorphous carbon, there is an effect of minimizing the side reaction with moisture and there is an effect that the rapid charging performance is improved. Conversely, when the D/G band ratio is less than 1.0, the degree of amorphization of the entire carbon included in the first carbon layer and the second carbon layer is lowered, so that the crystallinity of the carbon layer is enhanced. As described above, the carbon layer with high crystallinity is formed at a relatively high temperature, and rather, there is a disadvantage in that the size of silicon (Si) crystal grains increases, resulting in deterioration of service life performance.

In an exemplary embodiment of the present invention, the total weight of the first carbon layer and the second carbon layer may be 1.5 parts by weight to 10 parts by weight, specifically 2 parts by weight to 8 parts by weight, and more specifically 3 parts by weight to 7 parts by weight, based on total 100 parts by weight of the negative electrode active material. When the above range is satisfied, it is possible to prevent a decrease in the capacity and efficiency of the negative electrode active material.

The parts by weight of the entire Li included in the negative electrode active material may be 1 part by weight to 10 parts by weight, specifically 5 parts by weight to 10 parts by weight, based on total 100 parts by weight of the negative electrode active material.

The negative electrode active material may have a BET specific surface area of 1 $m^2$/g to 10 $m^2$/g, specifically 1 $m^2$/g to 5 $m^2$/g. When the above range is satisfied, side reactions between an electrolyte solution and the negative electrode active material during the charging and discharging of a battery may be reduced, so that the service life characteristics of the battery may be improved.

The negative electrode active material may have an average particle diameter ($D_{50}$) of 0.1 $\mu$m to 30 $\mu$m, specifically 1 $\mu$m to 20 $\mu$m, and more specifically 1 $\mu$m to 15 $\mu$m. When the above range is satisfied, the active material during charging and discharging is ensured to be structurally stable, and it is possible to prevent a problem in that the volume expansion/contraction level also becomes large as the particle diameter is excessively increased, and to prevent a problem in that the initial efficiency is reduced because the particle diameter is excessively small.

<Preparation method of negative electrode active material>

An exemplary embodiment of the present invention provides a method for preparing a negative electrode active material, the method including: forming silicon-based particles including $SiO_x$ (0<x<2) and Li and having a first carbon layer provided on at least a portion of the surface thereof; forming a composite layer on at least a portion of the silicon-based particle by reacting the silicon-based particles with a phosphate solution; and forming a second carbon layer on at least a portion of the composite layer.

The silicon-based particles provided with the first carbon layer may be formed through forming preliminary particles by heating and vaporizing a mixed powder of a Si powder and a $SiO_2$ powder, and then depositing the vaporized mixed gas; forming a first carbon layer on the preliminary particles; and mixing the preliminary particles on which the first carbon layer is formed with a Li powder, and then heat-treating the resulting mixture.

Specifically, the mixed powder of the Si powder and the $SiO_2$ powder may be heat-treated at 1,400°C to 1,800°C or 1,400°C to 1,600°C under vacuum.

The first carbon layer may be formed using a chemical vapor deposition (CVD) method using a hydrocarbon gas or by a method of carbonizing a material which is a carbon source.

Specifically, the first carbon layer may be formed by introducing the formed preliminary particles into a reaction furnace, and then subjecting a hydrocarbon gas to chemical vapor deposition (CVD) at 600 to 1,200°C. The hydrocarbon gas may be at least one hydrocarbon gas selected from the group consisting of methane, ethane, propane and acetylene, and may be heat-treated at 900°C to 1,000°C.

The mixing of the preliminary particles on which the first carbon layer is formed with the Li powder, and then heat-treating of the resulting mixture may be performed at 700°C to 900°C for 4 hours to 6 hours, and specifically at 800°C for 5 hours.

The silicon-based particles may include the above-described Li silicates.

The particle size of the particles may be adjusted by a method such as a ball mill, a jet mill, or an air current classification, and the method is not limited thereto.

The reaction of the silicon-based particles with the phosphate solution includes reacting the lithium by-product present on at least a portion of the silicon-based particles with the phosphate solution.

The lithium by-product present on at least a portion of the silicon-based particle may be a lithium by-product due to unreacted lithium during lithium doping.

The phosphate solution may include Al, B or Zn. Specifically, the phosphate solution may be a mixed solution of a salt containing Al, B or Zn and a phosphoric acid solution. Specifically, the phosphate solution may be a mixed solution of an $Al_2(SO_4)_3$ solution and a $H_3PO_4$ solution, or a mixed solution of a $B(OH)_3$ solution and a $H_3PO_4$ solution. In this case, the solutions may be mixed at a weight ratio of 1:2 to 1:6 (solution including M:solution including P).

The silicon-based particles and the phosphate solution may be mixed at a weight ratio of 1:2 to 1:10, specifically 1:5.

The reaction of the silicon-based particles with the phosphate solution may be performed for within 3 hours, or specifically for 1 hour.

Through the reaction, a composite layer including Li element, M element, P element and O element is formed.

The above-described content may be applied to the composite layer.

In this case, an unreacted lithium compound may still be present between the silicon-based particles and the formed composite layer or on the surface of the composite layer.

In order to suppress a side reaction due to the unreacted lithium compound, forming a second layer on at least a portion of the composite layer may be performed.

The second carbon layer provided on at least a portion of the composite layer may be formed using chemical vapor deposition (CVD) using a hydrocarbon gas or by a method of carbonizing a material which is a carbon source.

Specifically, the second carbon layer may be formed by introducing the formed preliminary particles into a reaction furnace, and then subjecting a hydrocarbon gas to chemical vapor deposition (CVD) at less than 800°C. The hydrocarbon gas may be at least one hydrocarbon gas selected from the group consisting of methane, ethane, propane and acetylene, and may be heat-treated at 600°C to less than 800°C. For example, the forming of the second carbon layer on at least a portion of the composite layer may be performed under heat-treatment conditions of 700°C and 4 hours in an acetylene or propane gas atmosphere.

By performing a heat treatment at less than 800°C as described above to enhance the degree of amorphization of the carbon layer, the second carbon layer may be formed. Since the remaining lithium by-product may be effectively covered by enhancing the degree of amorphization of the carbon layer, there is an effect of minimizing the side reaction with moisture and there is an effect that the rapid charging performance is improved Conversely, when the degree of amorphization of the carbon layer is low, that is, the degree of crystallization is high, the size of Si crystal grains is increased because carbon coating is performed at a relatively high temperature, so that there is a disadvantage in that the service life performance deteriorates.

When the negative electrode active material prepared as described above is analyzed by Raman spectroscopy, the ratio of D band peak intensity to G band peak intensity (D/G band ratio) may be 1.0 or more.

**<Negative electrode>**

The negative electrode according to an exemplary embodiment of the present invention may include the above-described negative electrode active material.

Specifically, the negative electrode may include a negative electrode current collector and a negative electrode active material layer disposed on the negative electrode current collector. The negative electrode active material layer may include the negative electrode active material. Furthermore, the negative electrode active material layer may further include a binder and/or a conductive material.

The negative electrode active material layer may be formed by applying a negative electrode slurry including a negative electrode active material, a binder, a thickener and/or a conductive material to at least one surface of a current collector and drying and rolling the current collector.

The negative electrode slurry may further include an additional negative electrode active material.

As the additional negative electrode active material, a compound capable of reversible intercalation and deintercalation of lithium may be used. Specific examples thereof include a carbonaceous material such as artificial graphite, natural graphite, graphized carbon fiber, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be undoped and doped with lithium such as $SiO_\beta$ ($0 < \beta < 2$), $SnO_2$, vanadium oxide, lithium titanium oxide, and lithium vanadium oxide; or a composite including the metallic compound and the carbonaceous material such as a Si-C composite or a Sn-C composite, and the like, and any one thereof or a mixture of two or more thereof may be used. Furthermore, a metallic lithium thin film may be used as the negative electrode active material. Alternatively, both low crystalline carbon and high crystalline carbon, and the like may be used as the carbon material. Typical examples of the low crystalline carbon include soft carbon and hard carbon, and typical examples of the high crystalline carbon include irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The additional negative electrode active material may be a carbon-based negative electrode active material.

In an exemplary embodiment of the present invention, a weight ratio of the negative electrode active material and the additional negative electrode active material included in the negative electrode slurry may be 10:90 to 90:10, specifically 10:90 to 50:50.

The negative electrode slurry may include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

The negative electrode current collector is sufficient as long as the negative electrode current collector has conductivity without causing a chemical change to the battery, and is not particularly limited.

For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 6 $\mu$m to 20 $\mu$m, the thickness of the current collector is not limited thereto.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a fluorocarbon powder; a metal powder such as an aluminum powder, and a nickel powder; a conductive whisker such as zinc oxide and potassium titanate; a conductive metal oxide such as titanium oxide; a conductive material such as polyphenylene derivatives, and the like.

The thickener may be carboxymethyl cellulose (CMC) and is not limited thereto, and a thickener used in the art may be appropriately employed.

**<Secondary battery>**

A secondary battery according to an exemplary embodiment of the present invention may include the above-described negative electrode according to an exemplary embodiment. Specifically, the secondary battery may include a negative electrode, a positive electrode, a separator interposed between the positive electrode and the negative electrode, and an electrolyte, and the negative electrode is the same as the above-described negative electrode. Since the negative electrode has been previously described, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 to 500 $\mu$m, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least one selected from the group consisting of Co, Mn, Al, Cu, Fe, Mg, B and Ga, and c2 satisfies $0.01 \leq c2 \leq 0.5$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

And, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, ethylene carbonate and propylene carbonate which are cyclic carbonates may be preferably used because they have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

According to still another exemplary embodiment of the present invention, provided are a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

**<Examples and Comparative Examples>**

## Example 1

After 94 g of a powder in which Si and $SiO_2$ were mixed at a molar ratio of 1 : 1 was mixed in a reaction furnace, the resulting mixture was heated under vacuum at a sublimation temperature of 1,400°C. Thereafter, a mixed gas of the vaporized Si and $SiO_2$ was reacted in a cooling zone in a vacuum state having a cooling temperature of 800°C and condensed into a solid phase. Silicon-based particles having a size of 6 $\mu$m were prepared by pulverizing the preliminary silicon-based negative electrode active material using a ball mill for 3 hours. Thereafter, the silicon-based negative electrode active material was placed in the hot zone of a CVD device while flowing Ar gas to maintain an inert atmosphere, a first carbon layer was formed on the surface of the silicon-based negative electrode active material by blowing the methane into the hot zone at 900°C using Ar as a carrier gas to react the methane under $10^{-1}$ torr for 5 hours, and then 6 g of a Li metal powder was added thereto, and an additional heat treatment was performed at a temperature of 800°C in an inert atmosphere to prepare silicon-based particles.

After a mixed solution of a 0.1 M $Al_2(SO_4)_3$ solution and a 0.1 M $H_3PO_4$ solution and the silicon-based particles were mixed at a weight ratio of 5:1, the resulting mixture was stirred for 1 hour, and then filtered and dried to form a composite layer.

After the silicon-based particle powder on which the composite layer was formed was put into a reaction furnace, a negative electrode active material was prepared by performing chemical vapor deposition (CVD) at 700°C for 4 hours using propane as a hydrocarbon gas to form a second carbon layer. A second carbon layer was formed at 2.4 wt% with respect to the total weight.

Li and Al were detected during ICP-OES analysis of the negative electrode active material, and Al, P and O were detected during XPS analysis.

## Example 2

A negative electrode active material was prepared in the same manner as in Example 1, except that the weight ratio of the mixed solution and the silicon-based particles was 3:1.

Li and Al were detected during ICP-OES analysis of the negative electrode active material, and Al, P and O were detected during XPS analysis.

## Example 3

A negative electrode active material was prepared in the same manner as in Example 1, except that the weight ratio of the mixed solution and the silicon-based particles was 7:1.

Li and Al were detected during ICP-OES analysis of the negative electrode active material, and Al, P and O were detected during XPS analysis.

## Example 4

A negative electrode active material was prepared in the same manner as in Example 1, except that $B(OH)_3$ was used instead of $Al_2(SO_4)_3$.

Li and B were detected during ICP-OES analysis of the negative electrode active material, and B, P and O were detected during XPS analysis.

## Example 5

A negative electrode active material was prepared in the same manner as in Example 1, except that the CVD reaction time was set to 2 hours in the process of introducing the second carbon layer.

Li and Al were detected during ICP-OES analysis of the negative electrode active material, and Al, P and O were detected during XPS analysis.

## Example 6

A negative electrode active material was prepared in the same manner as in Example 1, except that the CVD reaction time was set to 10 hours in the process of introducing the second carbon layer.

Li and Al were detected during ICP-OES analysis of the negative electrode active material, and Al, P and O were detected during XPS analysis.

## Comparative Example 1

A negative electrode active material was prepared in the same manner as in Example 1, except that the second carbon layer was not formed.

Li and Al were detected during ICP-OES analysis of the negative electrode active material, and Al, P and O were detected during XPS analysis.

## Comparative Example 2

A negative electrode active material was prepared in the same manner as in Example 1, except that the composite layer and the second carbon layer were not formed.

Al was not detected during ICP-OES analysis of the negative electrode active material, and Al and P were not detected during XPS analysis.

## Comparative Example 3

A negative electrode active material was prepared in the same manner as in Example 1, except that the heat treatment temperature of the second carbon layer was set to 900°C.

Li and Al were detected during ICP-OES analysis of the negative electrode active material, and Al, P and O were detected during XPS analysis.

## Comparative Example 4

A negative electrode active material was prepared in the same manner as in Example 1, except that only $H_3PO_4$ was used without using $Al_2(SO_4)_3$ in the process of preparing the composite layer.

Al was not detected during ICP-OES analysis of the negative electrode active material, and P and O were detected during XPS analysis.

## Comparative Example 5

A negative electrode active material was prepared in the same manner as in Example 1, except that only $Al_2(SO_4)_3$ was used without using $H_3PO_4$ in the process of preparing the composite layer.

Li and Al were detected during ICP-OES analysis of the negative electrode active material, and P was not detected during XPS analysis.

The configurations of the negative electrode active materials prepared in the Examples and Comparative Examples are shown in the following Tables 1 and 2.

[Table 1]

| | Part by weight of first carbon layer (based on total 100 parts by weight of negative electrode active material) | Part by weight of composite layer (based on total 100 parts by weight of negative electrode active material) | M: P molar ratio | Part by weight of second carbon layer (based on total 100 parts by weight of negative electrode active material) | Part by weight of entire carbon layer | D/G band ratio |
|---|---|---|---|---|---|---|
| Example 1 | 2.9 | 1.4 | 1:1 | 2.4 | 5.3 | 1.05 |
| Example 2 | 2.9 | 0.8 | 1:1 | 2.4 | 5.3 | 1.07 |
| Example 3 | 2.8 | 2.8 | 1:1 | 2.4 | 5.2 | 1.05 |
| Example 4 | 2.9 | 1.3 | 1:1 | 2.4 | 5.3 | 1.06 |
| Example 5 | 2.9 | 1.5 | 1:1 | 0.7 | 3.6 | 1.02 |
| Example 6 | 2.8 | 1.4 | 1:1 | 4.0 | 6.8 | 1.30 |
| Comparative Example 1 | 3.0 | 1.5 | 1:1 | - | 4.5 | 0.87 |
| Comparative Example 2 | 3.0 | - | - | - | 3.0 | 0.85 |

(continued)

| | Part by weight of first carbon layer (based on total 100 parts by weight of negative electrode active material) | Part by weight of composite layer (based on total 100 parts by weight of negative electrode active material) | M: P molar ratio | Part by weight of second carbon layer (based on total 100 parts by weight of negative electrode active material) | Part by weight of entire carbon layer | D/G band ratio |
|---|---|---|---|---|---|---|
| Comparative Example 3 | 3.0 | 1.5 | 1:1 | 3.4 | 6.4 | 0.81 |
| Comparative Example 4 | 2.9 | 1.4 | 1:0 | 2.7 | 5.6 | 1.05 |
| Comparative Example 5 | 2.9 | 1.2 | 0:1 | 2.4 | 5.3 | 1.04 |

**<Measurement of content of carbon layer>**

The contents of the first carbon layer and the second carbon layer were analyzed using a CS-analyzer (CS-800, Eltra), and the content of the second carbon layer was confirmed by calculating "the content of the entire carbon layer - the content of the first carbon layer".

**<Analysis of elements by ICP and XPS analysis>**

The content of the composite layer was calculated through the content of Li and M using ICP analysis and the content ratio of M, P and O obtained from the XPS depth profile.

The contents of Li and M elements were confirmed by an ICP-OES analysis using an inductively coupled plasma atomic emission spectrometer (ICP-OES, AVIO 500 from Perkin-Elmer 7300).

The contents of the M, P and O elements were confirmed through XPS (Nexsa ESCA System, Thermo Fisher Scientific (NEXSA 1)).

XPS was measured by the following method. First, the as-received survey scan spectrum and narrow scan spectrum were obtained for each sample. Next, a survey scan spectrum and a narrow scan spectrum were obtained while performing the depth profile, and the depth profile was performed up to 3000 seconds using monatomic Ar (low current). The contents of M, P and O elements were confirmed from the above results.

Measurement and data processing conditions are as follows.

- X-ray source: Monochromated Al K $\alpha$ (1486.6 eV)
- X-ray spot size: 400 $\mu$m
- Sputtering gun: Monatomic Ar (energy: 1000 eV, current: low, raster width: 2 mm)
- Etching rate: 0.09 nm/s for $Ta_2O_5$
- Operation Mode: CAE (Constant Analyzer Energy) mode
- Survey scan: pass energy 200 eV, energy step 1 eV
- Narrow scan: scanned mode, pass energy 50 eV, energy step 0.1 eV
- Charge compensation: flood gun off
- SF: Al THERMO1
- ECF: TPP-2M
- BG subtraction: Shirley

**<Measurement of D/G band ratio by Raman spectroscopy>**

Specifically, the D/G band ratio was measured using Renishaw 2000 Raman microscope system and 532 nm laser excitation, and was measured using a 100x optical lens under conditions of a low laser power density and an exposure time of 30 seconds to avoid laser thermal effects. After a total of 25 points in a 5 $\mu$m x 5 um region were measured and fitting was performed using the Lorentzian function to reduce positional deviation, the D/G band ratio was calculated by calculating the average value of the D band and the G band.

[Table 2]

| | $D_{50}$ ($\mu$m) of negative electrode active material | BET specific surface area ($m^2$/g) of negative electrode active material | Part by weight of entire Li (based on total 100 parts by weight of negative electrode active material) included in negative electrode active material |
|---|---|---|---|
| Example 1 | 7.4 | 2.3 | 7.4 |
| Example 2 | 7.1 | 2.3 | 7.4 |
| Example 3 | 7.3 | 2.3 | 7.3 |
| Example 4 | 7.3 | 2.3 | 7.4 |
| Example 5 | 7.2 | 2.1 | 7.4 |
| Example 6 | 7.3 | 2.5 | 7.1 |
| Comparative Example 1 | 7.0 | 3.2 | 7.7 |
| Comparative Example 2 | 6.9 | 3.5 | 7.9 |
| Comparative Example 3 | 7.1 | 1.8 | 7.3 |
| Comparative Example 4 | 7.1 | 2.5 | 7.5 |
| Comparative Example 5 | 7.2 | 2.4 | 7.5 |

The average particle diameter (D50) of the negative electrode active material was measured by the Microtrac laser scattering method.

The BET specific surface area of the negative electrode active material was measured by performing degassing at 200°C for 8 hours using a BET measuring apparatus (BEL-SORP-MAX, Nippon Bell), and performing $N_2$ adsorption/-desorption at 77 K.

The content of the Li atom was confirmed by an ICP analysis using an inductively coupled plasma atomic emission spectrometer (ICP-OES, AVIO 500 from Perkin-Elmer 7300).

**<Experimental Example: Evaluation of discharge capacity, initial efficiency, and service life (capacity retention rate) characteristics>**

Negative electrodes and batteries were prepared using the negative electrode active materials in the Examples and the Comparative Examples, respectively.

**Manufacture of negative electrode**

A mixture of the negative electrode active material prepared in Example 1 and graphite (average particle diameter (D50): 20 $\mu$m) as the carbon-based active material mixed at a weight ratio of 15:85 was used as a negative electrode material.

The negative electrode material, styrene-butadiene rubber (SBR) as a binder, Super C65 as a conductive material, and carboxymethyl cellulose (CMC) as a thickener were mixed at a weight ratio of 96:2:1:1, and the resulting mixture was added to distilled water as a solvent for forming a negative electrode slurry to prepare a negative electrode slurry.

One surface of a copper current collector (thickness: 15 $\mu$m) as a negative electrode current collector was coated with the negative electrode slurry in a loading amount of 3.6 mAh/$cm^2$, and the copper current collector was roll-pressed and dried in a vacuum oven at 130°C for 10 hours to form a negative electrode active material layer (thickness: 50 $\mu$m), which was employed as a negative electrode according to Example 1A (thickness of the negative electrode: 65 $\mu$m).

Furthermore, the negative electrodes of Examples 2 to 6 and Comparative Examples 1 to 5 were manufactured in the same manner as in Example 1, except that the negative electrode active materials prepared in Examples 2 to 6 and Comparative Examples 1 to 5 were used, respectively, instead of the negative electrode active material of Example 1.

**Manufacture of secondary battery**

A lithium metal foil was prepared as a positive electrode.
Coin-type half cells of Examples 1 to 6 and Comparative Examples 1 to 5 were manufactured by interposing a porous polyethylene separator between the negative electrodes of Examples 1 to 6 and Comparative Examples 1 to 5 manufactured above and the positive electrode and injecting an electrolytic solution thereinto.

As the electrolyte, a product obtained by dissolving 0.5 wt% of vinylene carbonate (VC) in a solution of ethyl methyl carbonate (EMC) and ethylene carbonate (EC) mixed at a volume ratio of 7:3, and dissolving $LiPF_6$ at a concentration of 1M was used.

**Evaluation of capacity retention rate**

The cycle capacity retention rates of the secondary batteries manufactured in Examples 1 to 6 and Comparative Examples 1 to 5 were evaluated using an electrochemical charger/discharger.

The cycle capacity retention rate was evaluated at a temperature of 25°C, the first and second cycles were charged and discharged at 0.1 C, and the third and subsequent cycles were charged and discharged at 0.5 C (charging conditions: CC/CV, 5 mV/0.005 C cut-off, discharging conditions: CC, 1.5 V cut off).

The discharge capacity (mAh/g) and initial efficiency (%) were derived from the results during 1st charge/-discharge.

The capacity retention rate was calculated as follows.

Capacity retention rate (%) = { (Discharge capacity in the Nth cycle)/(Discharge capacity in the 1st cycle)} X 100

(In the equation, N is an integer of 1 or higher.)

The 50th cycle capacity retention rate (%) is shown in the following Table 3.

[Table 3]

| Battery | Discharge capacity (mAh/g) | Initial efficiency (%) | Capacity retention rate (%) |
|---|---|---|---|
| Example 1 | 508 | 91.5 | 93.9 |
| Example 2 | 508 | 91.6 | 92.5 |
| Example 3 | 508 | 91.8 | 93.1 |
| Example 4 | 508 | 91.5 | 93.7 |
| Example 5 | 508 | 91.7 | 91.5 |
| Example 6 | 508 | 91.6 | 92.6 |
| Comparative Example 1 | 507 | 89.2 | 80.1 |
| Comparative Example 2 | 507 | 88.9 | 78.6 |
| Comparative Example 3 | 508 | 82.2 | 75.2 |
| Comparative Example 4 | 506 | 85.5 | 82.2 |
| Comparative Example 5 | 506 | 88.3 | 83.6 |

The negative electrode active material according to the present invention includes a first carbon layer, a composite layer and a second carbon layer and is characterized by a high degree of amorphization of the carbon layer, the lithium by-product included in the silicon-based particles may be effectively removed when an inorganic material surface layer such as the composite layer is provided, and by effectively covering the unreacted lithium by-products, it is possible to prevent the lithium by-products from reacting with moisture in the slurry to degrade the physical properties of the slurry. In addition, there is an effect in which the stability of the electrode state and/or the charge/discharge capacity are/is improved by increasing the content of amorphous carbon and effectively controlling the size of Si crystal grains.

In Table **3,** it can be confirmed that Examples 1 to 6 all have excellent discharge capacity, initial efficiency and capacity retention rate.

Conversely, since Comparative Examples 1 and 2 did not include the second carbon layer or did not include the composite layer, it could be confirmed that a side reaction with moisture occurred, and thus, the initial efficiency and capacity retention rate decreased. In Comparative Example 3, the degree of crystallization of the carbon layer was high due to the low D/G band ratio, and since the carbon coating was performed at a relatively high temperature, the size of the Si crystal grains increases, so that it could be confirmed that the service life performance deteriorated. In the case of Comparative Example 4, since only an acid was used without using a metal salt, Li inside silicon-based particles was also eluted during reaction, so that a phenomenon in which the efficiency and capacity retention rate deteriorated occurred, and in the case of Comparative Example 5, adsorption strength deteriorated because there was no phosphate salt, so that the desorption of the composite layer occurred, and thus, the passivation effect was reduced, thereby confirming that the efficiency and capacity retention rate deteriorated.

**Claims**

1. A negative electrode active material comprising:

   silicon-based particles comprising $SiO_x$, wherein $0<x<2$, and Li and having a first carbon layer provided on at least a portion of a surface thereof;
   a composite layer provided on at least a portion of the silicon-based particle; and
   a second carbon layer provided on at least a portion of the composite layer,
   wherein the composite layer comprises Li, M, P and O elements,
   the M is Al, B or Zn, and
   a ratio of D band peak intensity to G band peak intensity (D/G band ratio) is 1.0 or more upon analysis of the negative electrode active material by Raman spectroscopy,
   wherein a molar ratio of the M element and the P element is 1:0.5 to 1:3.

2. The negative electrode active material of claim 1, wherein the M is Al or B.

3. The negative electrode active material of claim 1,
   wherein the elements comprised in the composite layer have a molar ratio of $Li_xM_yP_zO_w$ ($0<x\leq3$, $0<y\leq1$, $0.5\leq z\leq3$, and $4<w\leq12$).

4. The negative electrode active material of claim 1, wherein a lithium compound is present between the composite layer and the second carbon layer.

5. The negative electrode active material of claim 4, wherein the lithium compound comprises one or more selected from the group consisting of $Li_2O$, LiOH and $Li_2CO_3$•

6. The negative electrode active material of claim 1, wherein the composite layer is formed by reacting one or more selected from the group consisting of $Li_2O$, LiOH and $Li_2CO_3$ with a phosphate solution.

7. The negative electrode active material of claim 1, wherein the first carbon layer is comprised in an amount of 1 part by weight to 5 parts by weight based on total 100 parts by weight of the negative electrode active material.

8. The negative electrode active material of claim 1, wherein the composite layer is comprised in an amount of 0.5 parts by weight to 3 parts by weight based on total 100 parts by weight of the negative electrode active material.

9. The negative electrode active material of claim 1, wherein the second carbon layer is comprised in an amount of 0.5 parts by weight to 5 parts by weight based on total 100 parts by weight of the negative electrode active material.

10. The negative electrode active material of claim 1, wherein a total weight of the first carbon layer and the second carbon layer is 1.5 parts by weight to 10 parts by weight based on total 100 parts by weight of the negative electrode active material.

11. A method for preparing a negative electrode active material, according to claim 1,

    the method comprising;
    forming silicon-based particles comprising $SiO_x$,
    wherein $0<x<2$, and Li and having a first carbon layer provided on at least a portion of a surface thereof;
    forming a composite layer on at least a portion of the silicon-based particle by reacting the silicon-based particles with a phosphate solution; and
    forming a second carbon layer on at least a portion of the composite layer.

12. A negative electrode comprising the negative electrode active material according to any one of claims 1 to 10.

13. A secondary battery comprising the negative electrode according to claim 12.

**Patentansprüche**

1. Negatives Elektrodenaktivmaterial, umfassend:

   Partikel auf Siliciumbasis, die $SiO_x$, worin 0<x<2 ist, und Li umfassen und eine erste Kohlenstoffschicht aufweisen, die auf mindestens einem Abschnitt ihrer Oberfläche aufgebracht ist,
   eine Kompositschicht, die auf mindestens einem Abschnitt des Partikels auf Siliciumbasis aufgebracht ist, und eine zweite Kohlenstoffschicht, die auf mindestens einem Abschnitt der Kompositschicht aufgebracht ist,
   wobei die Kompositschicht Li-, M-, P- und O-Elemente umfasst,
   wobei das M Al, B oder Zn ist und
   ein Verhältnis der D-Bandenpeakintensität zur G-Bandenpeakintensität (D/G-Bandenverhältnis) 1,0 oder mehr bei einer Analyse des negativen Elektrodenaktivmaterials durch Raman-Spektroskopie beträgt,
   wobei ein Molverhältnis des M-Elements und des P-Elements 1:0,5 bis 1:3 beträgt.

2. Negatives Elektrodenaktivmaterial nach Anspruch 1, wobei das M Al oder B ist.

3. Negatives Elektrodenaktivmaterial nach Anspruch 1, wobei die in der Kompositschicht enthaltenen Elemente ein Molverhältnis von $Li_xM_yP_zO_w$ (0<x≤3, 0<y≤1, 0,5≤z≤3 und 4<w≤12) aufweisen.

4. Negatives Elektrodenaktivmaterial nach Anspruch 1, wobei eine Lithiumverbindung zwischen der Kompositschicht und der zweiten Kohlenstoffschicht vorhanden ist.

5. Negatives Elektrodenaktivmaterial nach Anspruch 4, wobei die Lithiumverbindung eines oder mehrere, ausgewählt aus der Gruppe, bestehend aus $Li_2O$, LiOH und $Li_2CO_3$, umfasst.

6. Negatives Elektrodenaktivmaterial nach Anspruch 1, wobei die Kompositschicht durch Reaktion eines oder mehrerer, ausgewählt aus der Gruppe, bestehend aus $Li_2O$, LiOH und $Li_2CO_3$, mit einer Phosphatlösung gebildet ist.

7. Negatives Elektrodenaktivmaterial nach Anspruch 1 wobei die erste Kohlenstoffschicht in einer Menge von 1 Gewichtsteil bis 5 Gewichtsteile bezogen auf insgesamt 100 Gewichtsteile des negativen Elektrodenaktivmaterials enthalten ist.

8. Negatives Elektrodenaktivmaterial nach Anspruch 1, wobei die Kompositschicht in einer Menge von 0,5 Gewichtsteilen bis 3 Gewichtsteilen bezogen auf insgesamt 100 Gewichtsteile des negativen Elektrodenaktivmaterials enthalten ist.

9. Negatives Elektrodenaktivmaterial nach Anspruch 1, wobei die zweite Kohlenstoffschicht in einer Menge von 0,5 Gewichtsteilen bis 5 Gewichtsteilen bezogen auf insgesamt 100 Gewichtsteile des negativen Elektrodenaktivmaterials enthalten ist.

10. Negatives Elektrodenaktivmaterial nach Anspruch 1, wobei das Gesamtgewicht der ersten Kohlenstoffschicht und der zweiten Kohlenstoffschicht 1,5 Gewichtsteile bis 10 Gewichtsteile bezogen auf insgesamt 100 Gewichtsteile des negativen Elektrodenaktivmaterials beträgt.

11. Verfahren zur Herstellung eines negativen Elektrodenaktivmaterials gemäß Anspruch 1,

   wobei das Verfahren umfasst
   Bilden von Partikeln auf Siliciumbasis, die $SiO_x$, worin 0<x<2 ist, und Li umfassen und eine erste Kohlenstoffschicht aufweisen, die auf mindestens einem Abschnitt ihrer Oberfläche aufgebracht ist,
   Bilden einer Kompositschicht auf mindestens einem Abschnitt des Partikels auf Siliciumbasis durch Reaktion der Partikel auf Siliciumbasis mit einer Phosphatlösung und
   Bilden einer zweiten Kohlenstoffschicht auf mindestens einem Abschnitt der Kompositschicht.

12. Negative Elektrode, umfassend das negative Elektrodenaktivmaterial gemäß einem der Ansprüche 1 bis 10.

**13.** Sekundärbatterie, umfassend die negative Elektrode gemäß Anspruch 12.

**Revendications**

**1.** Matériau actif d'électrode négative comprenant :

des particules à base de silicium comprenant du $SiO_x$, dans lequel $0<x<2$, et du Li et présentant une première couche de carbone fournie sur au moins une portion d'une surface de celles-ci ;
une couche composite fournie sur au moins une portion de la particule à base de silicium ; et,
une seconde couche de carbone fournie sur au moins une portion de la couche composite,
dans lequel la couche composite comprend des éléments Li, M, P et O,
le M est Al, B ou Zn, et
un rapport de l'intensité de pic de bande D sur l'intensité de pic de bande G (rapport de bande D/G) est de 1,0 ou plus lors de l'analyse du matériau actif d'électrode négative par spectroscopie Raman,
dans lequel un rapport molaire de l'élément M et de l'élément P est de 1:0,5 à 1:3.

**2.** Matériau actif d'électrode négative selon la revendication 1, dans lequel le M est Al ou B.

**3.** Matériau actif d'électrode négative selon la revendication 1, dans lequel les éléments compris dans la couche composite présentent un rapport molaire de $Li_xM_yP_zO_w$ ($0<x\leq3$, $0<y\leq1$, $0,5\leq z\leq3$ et $4<w\leq12$).

**4.** Matériau actif d'électrode négative selon la revendication 1, dans lequel un composé de lithium est présent entre la couche composite et la seconde couche de carbone.

**5.** Matériau actif d'électrode négative selon la revendication 4, dans lequel le composé de lithium comprend un ou plusieurs sélectionnés dans le groupe consistant en $Li_2O$, LiOH et $Li_2CO_3$.

**6.** Matériau actif d'électrode négative selon la revendication 1, dans lequel la couche composite est formée en faisant réagir un ou plusieurs sélectionnés dans le groupe consistant en $Li_2O$, LiOH et $Li_2CO_3$ avec une solution de phosphate.

**7.** Matériau actif d'électrode négative selon la revendication 1, dans lequel la première couche de carbone est comprise dans une quantité de 1 part en poids à 5 parts en poids sur la base de 100 parts en poids au total du matériau actif d'électrode négative.

**8.** Matériau actif d'électrode négative selon la revendication 1, dans lequel la couche composite est comprise dans une quantité de 0,5 part en poids à 3 parts en poids sur la base de 100 parts en poids au total du matériau actif d'électrode négative.

**9.** Matériau actif d'électrode négative selon la revendication 1, dans lequel la seconde couche de carbone est comprise dans une quantité de 0,5 part en poids à 5 parts en poids sur la base de 100 parts en poids au total du matériau actif d'électrode négative.

**10.** Matériau actif d'électrode négative selon la revendication 1, dans lequel un poids total de la première couche de carbone et de la seconde couche de carbone est de 1,5 part en poids à 10 parts en poids sur la base de 100 parts en poids au total du matériau actif d'électrode négative.

**11.** Procédé de préparation d'un matériau actif d'électrode négative, selon la revendication 1, le procédé comprenant :

la formation de particules à base de silicium comprenant du $SiO_x$, dans lequel $0<x<2$, et du Li et présentant une première couche de carbone fournie sur au moins une portion d'une surface de celles-ci ;
la formation d'une couche composite sur au moins une portion de la particule à base de silicium en faisant réagir les particules à base de silicium avec une solution de phosphate ; et,
la formation d'une seconde couche de carbone sur au moins une portion de la couche composite.

**12.** Électrode négative comprenant le matériau actif d'électrode négative selon l'une quelconque des revendications 1 à 10.

**13.** Batterie secondaire comprenant l'électrode négative selon la revendication 12.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100794192

- US 20190214637 A1